# EUROPÄISCHE PATENTSCHRIFT

(11) **EP 3 710 733 B1**
(45) Veröffentlichungstag und Bekanntmachung des Hinweises auf die Patenterteilung: **25.08.2021**
(21) Anmeldenummer: 18789403.5
(22) Anmeldetag: 18.10.2018
(51) Int. Cl.: F16K 15/14

(54) **RÜCKSCHLAGVENTILELEMENT FÜR EINE RÜCKSCHLAGVENTILBAUGRUPPE SOWIE ENTSPRECHENDE RÜCKSCHLAGVENTILBAUGRUPPE**
CHECK VALVE ELEMENT FOR A CHECK VALVE ASSEMBLY AND CORRESPONDING CHECK VALVE ASSEMBLY
ÉLÉMENT SOUPAPE ANTIRETOUR POUR MODULE DE SOUPAPE ANTIRETOUR ET MODULE DE SOUPAPE ANTIRETOUR CORRESPONDANT

(30) Priorität: 14.11.2017 DE 102017220229
(43) Veröffentlichungstag der Anmeldung: 23.09.2020
(73) Patentinhaber: Audi AG, 85045 Ingolstadt (DE)
(72) Erfinder: SCHLEGELMILCH, Peter, 85101 Lenting (DE)
(86) Internationale Anmeldenummer: PCT/EP2018/078531
(87) Internationale Veröffentlichungsnummer: WO 2019/096531

(56) Entgegenhaltungen:
- EP-A1- 2 487 395
- EP-A1- 2 848 551
- AT-B- 384 401
- CN-A- 106 286 926
- DE-A1- 2 933 545
- DE-A1-102014 208 618
- US-A1- 2017 107 024

## Beschreibung

Die Erfindung betrifft ein Rückschlagventilelement für eine Rückschlagventilbaugruppe, mit einem eine Dichtfläche aufweisenden und federelastisch gelagerten Ventilkörper, der über Federarme mit einem den Ventilkörper in wenigstens einer Stellung umgreifenden Haltering derart federelastisch verbunden ist, dass der Ventilkörper in axialer Richtung parallel verlagerbar ist. Die Erfindung betrifft weiterhin eine Rückschlagventilbaugruppe.

Aus dem Stand der Technik ist beispielsweise die Druckschrift WO 2005/108835 A1 bekannt. Diese betrifft eine Ventilanordnung, mit einem Ventilkörper, welcher als Teil einer Flachfeder ausgestaltet ist und eine federelastisch gelagerte Dichtfläche aufweist, und welcher zwischen einer Schließstellung, in welcher der Dichtkörper der Mündung einer Ventilöffnung abdichtend anliegt, und einer Offenstellung, in welcher der Ventilkörper die Ventilöffnung freigibt, beweglich ist. Dabei ist vorgesehen, dass der Ventilkörper mittels wenigstens zweier um den Umfang des Ventilkörpers verteilt angeordneter Haltearme gelagert ist, wobei die Haltearme elastisch verformbar sind, derart, dass der Ventilkörper im Wesentlichen planparallel und senkrecht zur Ventilöffnung beweglich ist. Die Druckschrift EP 2487395 A1 offenbart auch ein bekanntes Rückschlagventilelement.

Es ist Aufgabe der Erfindung, ein Rückschlagventilelement für eine Rückschlagventilbaugruppe vorzuschlagen, welches gegenüber bekannten Rückschlagventilelementen Vorteile aufweist, insbesondere kostengünstig herstellbar und einfach montierbar ist, sowie sich durch eine gegenüber anderen Lösungen geringere Teileanzahl auszeichnet.

Dies wird erfindungsgemäß mit einem Rückschlagventilelement mit den Merkmalen des Anspruchs 1 erreicht. Dabei ist vorgesehen, dass der Haltering einstückig und materialeinheitlich mit einem Rastkörper zum rastenden Befestigen des Rückschlagventilelements in einer fluidführenden Einrichtung der Rückschlagventilbaugruppe ausgebildet ist, der sich in axialer Richtung in die von dem Ventilkörper abgewandte Richtung erstreckt und wenigstens einen in radialer Richtung federelastisch verlagerbaren Rastvorsprung aufweist.

Das Rückschlagventilelement ist vorzugsweise Bestandteil der Rückschlagventilbaugruppe. Es stellt einen Teil eines Rückschlagventils dar. Hierzu verfügt das Rückschlagventilelement über den Ventilkörper, welcher verlagerbar gelagert ist und zur Realisierung des Rückschlagventils mit einem Ventilsitz zusammenwirken kann. Der Ventilsitz ist ebenfalls bevorzugt Bestandteil der Rückschlagventilbaugruppe. Beispielsweise umgreift der Ventilsitz einen in der Rückschlagventilbaugruppe ausgebildeten Fluidkanal in Umfangsrichtung zumindest teilweise, besonders bevorzugt vollständig.

In Abhängigkeit von einer Relativposition des Ventilkörpers bezüglich des Ventilsitzes stellen sich unterschiedliche Durchströmungsquerschnitt durch das Rückschlagventil beziehungsweise den Fluidkanal ein. In anderen Worten liegt in einer ersten Stellung des Ventilkörpers bezüglich des Ventilsitzes ein erster Durchströmungsquerschnitt und in einer von der ersten Stellung verschiedenen zweiten Stellung ein von dem ersten Durchströmungsquerschnitt verschiedener zweiter Durchströmungsquerschnitt durch das Rückschlagventil vor.

Das Rückschlagventil kann derart ausgestaltet sein, dass es in einer Stellung des Ventilkörpers vollständig sperrt, also einen Durchströmungsquerschnitt von Null realisiert. Es kann jedoch auch vorgesehen sein, dass das Rückschlagventil derart ausgestaltet ist, dass ein über alle möglichen Stellungen des Ventilkörpers auftretender minimaler Durchströmungsquerschnitt von Null verschieden ist, sodass stets eine Durchströmung des Rückschlagventils, auch in Sperrrichtung, möglich ist.

Der mit dem Ventilsitz zusammenwirkende Ventilkörper ist Bestandteil des Rückschlagventilelements. Er verfügt über die Dichtfläche, welche in wenigstens einer Stellung des Ventilkörpers dichtend mit dem Ventilsitz zusammenwirkt beziehungsweise dichtend an diesem anliegt. Der Ventilkörper ist federelastisch gelagert, ist also bei einer Auslenkung aus seiner Ruhestellung mit einer Federkraft beaufschlagt, die ihn in Richtung der Ruhestellung beziehungsweise in diese drängt. Bevorzugt wird der Ventilkörper hierbei auch in Richtung des Ventilsitzes beziehungsweise an diesen gedrängt.

Zur Realisierung der Federkraft ist der Ventilkörper über die mehreren Federarme mit dem Haltering verbunden, welcher den Ventilkörper im Schnitt gesehen in der wenigstens einen Stellung umgreift, beispielsweise in der Ruhestellung. Der Ventilkörper ist in radialer Richtung bezüglich seiner Längsmittelachse beziehungsweise seiner Verlagerungsrichtung beabstandet von dem Haltering angeordnet. In radialer Richtung zwischen dem Ventilkörper und dem Haltering liegen die Federarme vor, welche den Ventilkörper mit dem Haltering federelastisch verbinden. Der Haltering ist vorzugsweise in Umfangsrichtung durchgehend ausgebildet. Alternativ kann selbstverständlich auch eine Unterbrechung des Halterings in Umfangsrichtung vorliegen.

Mittels der Federarme ist der Ventilkörper bezüglich des Halterings in Richtung der Verlagerungsrichtung verlagerbar, nämlich in axialer Richtung parallel verlagerbar. Die axiale Richtung liegt dabei vorzugsweise in Richtung der Längsmittelachse des Ventilkörpers und/oder der Längsmittelachse des Halterings vor. Unter der parallelen Verlagerbarkeit ist eine Verlagerbarkeit derart zu verstehen, dass der Ventilkörper in der ersten Stellung parallel zu dem Ventilkörper in der zweiten Stellung vorliegt, also in zwei unterschiedlichen Stellungen in zwei zueinander parallelen gedachten Ebenen liegt, vorzugsweise vollständig. Selbstverständlich umfasst die parallele Verlagerbarkeit auch ein leichtes Verkippen, welches während eines Betriebs der Rückschlagventilbaugruppe beispielsweise durch eine Fluidströmung durch das Rückschlagventil auftreten kann. Insoweit ist es hinreichend, wenn der Ventilkörper beziehungsweise seine Dichtfläche in unterschiedliche Stellungen lediglich im Wesentlichen parallel zu sich selbst angeordnet ist.

Die Befestigung des Rückschlagventilelements, insbesondere in einer Ventilaufnahme der Rückschlagventilbaugruppe, in welche der Fluidkanal einmündet, erfolgt mittels des Rastkörpers beziehungsweise des wenigstens einen Rastvorsprungs. Der Rastkörper ist hierbei einstückig und materialeinheitlich mit dem Haltering ausgeführt, liegt also gemeinsam mit diesem als ein einziges Bauteil vor. Dieses Bauteil ist beispielsweise als Stanzbauteil und/oder Tiefziehbauteil ausgeführt. Beispielsweise werden zunächst in einem ersten Bearbeitungsschritt die Federarme durch Stanzen ausgebildet und anschließend durch Tiefziehen der Rastkörper ausgebildet. Selbstverständlich kann das Bauteil auch auf andere Art und Weise hergestellt beziehungsweise ausgebildet werden.

Der Rastkörper dient dem rastenden Befestigen des Rückschlagventilelements in der Ventilaufnahme beziehungsweise in der fluidführenden Einrichtung, in welchen die Fluidaufnahme ausgebildet ist. Der Rastkörper erstreckt sich in axialer Richtung von dem Ventilkörper fort, nämlich bevorzugt in die von dem in die Ventilaufnahme einmündenden Fluidkanal abgewandte Richtung. In anderen Worten erstreckt sich der Rastkörper ausgehend von dem Haltering von dem Ventilsitz fort. Der Rastkörper verfügt über den Rastvorsprung, welcher schlussendlich dem rastenden Befestigen des Rückschlagventilelements durch Eingreifen in eine Rastaufnahme dient, welche an beziehungsweise in der fluidführenden Einrichtung ausgebildet ist. Beispielsweise liegt die Rastaufnahme als eine in Umfangsrichtung durchgehende, vorzugsweise kreisförmige Rastnut vor.

Der Rastvorsprung und die Rastaufnahme sind besonders bevorzugt derart ausgestaltet, dass ein Einbringen des Rastvorsprungs in die Rastaufnahme in zumindest einer Richtung, nämlich in einer Montagerichtung des Rückschlagventilelements, ohne weiteres möglich ist, eine Verlagerung in die Gegenrichtung nach dem Eingreifen des Rastvorsprungs in die Rastaufnahme jedoch zuverlässig unterbunden wird. In anderen Worten ist die auf das Rückschlagventilelement bei der Montage aufzubringende Kraft kleiner als die zum Lösen des Rückschlagventilelements notwendige Kraft.

Beispielsweise ist hierzu der Rastvorsprung in seiner Ruhestellung und/oder bei in die Rastaufnahme eingreifendem Rastvorsprung unter einem Winkel angeordnet, welcher größer als 0° und kleiner als 90° ist. Unter der Ruhestellung ist dabei die Anordnung des Rastvorsprungs zu verstehen, die vorliegt, sofern das Rückschlagventilelement außerhalb der fluidführenden Einrichtung und mithin außerhalb der Ventilaufnahme angeordnet ist. Vorzugsweise beträgt der Winkel mindestens 10°, mindestens 20° oder mindestens 30° und beträgt zusätzlich oder alternativ höchstens 45°.

Eine Weiterbildung der Erfindung sieht vor, dass der Rastkörper wenigstens bereichsweise zylindrisch, insbesondere kreiszylindrisch, ausgebildet ist. Der Rastkörper erstreckt sich ausgehend von dem Haltering in axialer Richtung also in Zylinderform. Vorzugsweise ist der Rastkörper hierbei in Umfangsrichtung durchgehend ausgebildet, zumindest bereichsweise. Insbesondere ist der sich unmittelbar an den Haltering anschließende Bereich des Rastkörpers in Umfangsrichtung durchgehend ausgebildet, wohingegen ein von dem Haltering beabstandet angeordneter Bereich durch wenigstens eine Ausnehmung unterbrochen ist, um den Rastvorsprung federelastisch auszubilden. Die zylindrische Ausgestaltung des Rastkörpers hat den Vorteil einer einfachen Herstellbarkeit und zudem eine einfache Montage.

Eine weitere bevorzugte Ausführungsform der Erfindung sieht vor, dass der Rastvorsprung auf der dem Haltering abgewandten Seite des Rastkörpers angeordnet ist. In anderen Worten ist der Rastvorsprung in axialer Richtung gesehen von dem Haltering beabstandet. Auf diese Art und Weise wird eine Verformung des Halterings, welche eine Beeinflussung des Ventilkörpers und damit der Ventilwirkung des Rückschlagventils haben kann, zuverlässig vermieden.

Im Rahmen einer weiteren Ausführungsform der Erfindung kann vorgesehen sein, dass der Rastvorsprung als ein in radialer Richtung nach außen gebogener Bereich des Rastkörpers vorliegt. Der nach außen gebogene Bereich des Rastkörpers ist derart angeordnet, dass er bei dem Einbringen des Rückschlagventils in die Ventilaufnahme rastend in die Rastaufnahme eingreift. Beispielsweise liegt der nach außen gebogene Bereich des Rastkörpers an einem freien Ende des Rastkörpers in axialer Richtung vor, also an einem dem Haltering abgewandten Rand des Rückschlagventilelements. Die Realisierung des Rastkörpers auf diese Art und Weise ermöglicht eine besonders kostengünstige Herstellung des Rückschlagventilelements.

Eine bevorzugte weitere Ausgestaltung der Erfindung sieht vor, dass zusätzlich zu dem Rastvorsprung wenigstens ein weiterer Rastvorsprung vorliegt, der ebenfalls in radialer Richtung federelastisch verlagerbar ist, wobei der Rastvorsprung und der weitere Rastvorsprung in Umfangsrichtung von einer in dem Rastkörper ausgebildeten Ausnehmung separiert sind. Um eine zuverlässige Befestigung des Rückschlagventilelements in der fluidführenden Einrichtung beziehungsweise der Ventilaufnahme zu gewährleisten, ist zusätzlich zu dem Rastvorsprung der weitere Rastvorsprung an dem Rastkörper ausgebildet. Idealerweise sind der Rastvorsprung und der weitere Rastvorsprung analog zueinander ausgestaltet, sodass die Ausführungen zu dem Rastvorsprung auch für den weiteren Rastvorsprung herangezogen werden können.

Die beiden Rastvorsprünge, also der Rastvorsprung und der weitere Rastvorsprung, sind in Umfangsrichtung voneinander beabstandet. Vorzugsweise liegen sie einander diametral gegenüber. Die beiden Rastvorsprünge sind in Umfangsrichtung voneinander separiert, nämlich von der Ausnehmung, die in dem Rastkörper ausgebildet ist. Beispielsweise erstreckt sich die Ausnehmung in axialer Richtung über mindestens 10 %, mindestens 20 %, mindestens 25 %, mindestens 30 %, mindestens 40 % oder mindestens 50 % der Erstreckung des Rückschlagventils in axialer Richtung. Zusätzlich oder alternativ kann die Erstreckung der Ausnehmung in axialer Richtung bezogen auf die Erstreckung des Rückschlagventilelements in dieselbe Richtung höchstens 50 %, höchstens 40 %, höchstens 30 % oder höchstens 25 % betragen.

Eine weitere bevorzugte Ausführungsform der Erfindung sieht vor, dass die Ausnehmung in die von dem Haltering abgewandte Richtung randoffen ausgebildet ist. In anderen Worten durchgreift die Ausnehmung den von dem Haltering abgewandten Rand des Rückschlagventilelements, welcher - im Längsschnitt gesehen - von dem freien Ende des Rückschlagventilelements gebildet ist. Durch die randoffene Ausgestaltung der Ausnehmung wird eine besonders gute Federwirkung des Rastvorsprungs beziehungsweise eine hohe Flexibilität des Rastvorsprungs realisiert.

Eine bevorzugte Weiterbildung der Erfindung sieht vor, dass sich der gebogene Bereich des Rastkörpers in axialer Richtung gesehen an den zylindrischen Bereich des Rastkörpers anschließt. Hierauf wurde vorstehend bereits hingewiesen. Der gebogene Bereich des Rastkörpers liegt auf der dem Haltering abgewandten Seite des zylindrischen Bereichs vor, nämlich insbesondere in axialer Richtung gesehen. Mithilfe des zylindrischen Bereichs des Rastkörpers, welcher zwischen dem Haltering und dem gebogenen Bereich vorliegt, wird eine gute Positionsstabilität des Rückschlagventilelements in der Ventilaufnahme beziehungsweise in der fluidführenden Einrichtung gewährleistet. Insbesondere verhindert der zylindrische Bereich zuverlässig ein Verkippen des Rückschlagventilelements in der Ventilaufnahme. Dies wird beispielsweise erzielt, indem der zylindrische Bereich mit seinem Außenumfang nach der Montage in der fluidführenden Einrichtung an einem Innenumfang der Ventilaufnahme anliegt, nämlich vorzugsweise in Umfangsrichtung durchgehend.

Eine weitere bevorzugte Ausführungsform der Erfindung sieht vor, dass der Rastkörper über einen gebogenen Übergangsbereich in den Haltering übergeht. Der Rastkörper und der Haltering sind mit dem Übergangsbereich einstückig und materialeinheitlich ausgebildet. Mithilfe des Übergangsbereichs wird sichergestellt, dass eine Materialschwächung und/oder Materialschädigung aufgrund der Umformung des Rückschlagventilelements während seiner Herstellung zuverlässig vermieden wird. Hierzu wird der Radius der Biegung des Übergangsbereichs entsprechend gewählt. Bevorzugt entspricht der Radius der Biegung bezogen auf die Erstreckung des Rückschlagventilelements in axialer Richtung mindestens 10 %, mindestens 15 %, mindestens 20 % oder mindestens 25 %.

Im Rahmen einer weiteren Ausführungsform der Erfindung kann vorgesehen sein, dass die Federarme bogen- oder spiralförmig ausgebildet sind. Die Federarme erstrecken sich in radialer Richtung ausgehend von dem Ventilkörper bis hin zu dem Haltering. Sie sind sowohl mit dem Ventilkörper als auch mit dem Haltering einstückig und materialeinheitlich ausgebildet. Bevorzugt verlaufen die Federarme zwischen dem Ventilkörper und dem Haltering nicht ausschließlich in radialer Richtung, wenngleich dies selbstverständlich vorgesehen sein kann. Bevorzugt weisen sie vielmehr zusätzlich zu der radialen Komponente eine Umfangskomponente auf, erstrecken sich also in Umfangsrichtung. Beispielsweise umgreift jeder der Federarme den Ventilkörper in Umfangsrichtung gesehen um mindestens 45°, mindestens 90°, mindestens 135°, mindestens 190°, mindestens 225°, mindestens 270° oder mehr. Mit einer derartigen Ausgestaltung der Federarme wird eine hervorragende Federwirkung realisiert.

Die Erfindung betrifft weiterhin eine Rückschlagventilbaugruppe, mit einem Rückschlagventilelement, insbesondere einem Rückschlagventilelement gemäß den Ausführungen im Rahmen dieser Beschreibung, das über einen eine Dichtfläche aufweisenden und federelastisch gelagerten Ventilkörper verfügt, der über Federarme mit einem den Ventilkörper in wenigstens einer Stellung umgreifenden Haltering derart federelastisch verbunden ist, dass der Ventilkörper in axialer Richtung parallel verlagerbar ist. Dabei ist vorgesehen, dass der Haltering einstückig und materialeinheitlich mit einem Rastkörper zum rastenden Befestigen des Rückschlagventilelements in einer fluidführenden Einrichtung der Rückschlagventilbaugruppe ausgebildet ist, der sich in axialer Richtung in die von dem Ventilkörper abgewandte Richtung erstreckt und wenigstens einen in radialer Richtung federelastisch verlagerbaren Rastvorsprung aufweist.

Auf die Vorteile einer derartigen Ausgestaltung der Rückschlagventilbaugruppe beziehungsweise des Rückschlagventilelements wurde bereits hingewiesen. Sowohl die Rückschlagventilbaugruppe als auch das Rückschlagventilelement können gemäß den Ausführungen im Rahmen dieser Beschreibung weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Schnittdarstellung durch eine Rückschlagventilbaugruppe, mit einer fluidführenden Einrichtung sowie einem Rückschlagventilelement, sowie
- Figur 2: eine schematische Darstellung des Rückschlagventilelements.

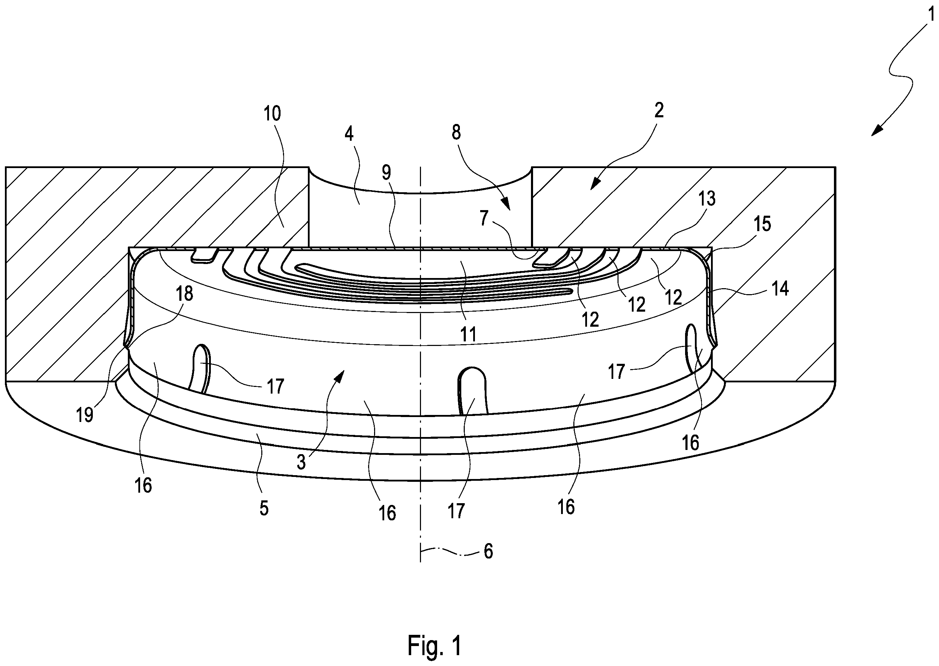

Die Figur 1 zeigt eine schematische Schnittdarstellung einer Rückschlagventilbaugruppe 2, die über eine fluidführende Einrichtung 2 und ein Rückschlagventilelement 3 verfügt. In der fluidführenden Einrichtung 2 ist ein Fluidkanal 4 ausgebildet, der in eine Ventilaufnahme 5 einmündet, welche ebenfalls in der fluidführenden Einmündung 2 vorliegt. Bezüglich einer Längsmittelachse 6 der Ventilaufnahme 5 weist die Ventilaufnahme 5 in radialer Richtung größere Abmessungen auf als der Fluidkanal 4. In dem hier dargestellten Ausführungsbeispiel fallen die Längsmittelachse 6 der Ventilaufnahme 5 und eine Längsmittelachse des Fluidkanals 4 zusammen, sodass der Fluidkanal 4 bezüglich der Längsmittelachse 6 mittig in die Ventilaufnahme 5 einmündet.

Das in der Ventilaufnahme 5 angeordnete Rückschlagventilelement 3 bildet zusammen mit einem von der fluidführenden Einrichtung 2 ausgebildeten Ventilsitz 7 ein Rückschlagventil 8 aus. Der Ventilsitz 7 ist an einer eine Mündungsöffnung 9 des Fluidkanals 4 in die Ventilaufnahme 5 einfassenden Wand 10 der fluidführenden Einrichtung 2 ausgebildet. Der Ventilsitz 7 umgreift in Umfangsrichtung den Fluidkanal 4 beziehungsweise seine Mündungsöffnung 9 vorzugsweise durchgehend und vollständig.

Das Rückschlagventilelement 3 verfügt über einen Ventilkörper 11, der in dem hier dargestellten Ausführungsbeispiel als Ventilscheibe ausgestaltet ist. Der Ventilkörper 11 wirkt mit dem Ventilsitz 7 zur Ausbildung des Rückschlagventils 8 zusammen. In einer Stellung des Ventilkörpers 11 liegt dieser dichtend an dem Ventilsitz 7 an, sodass eine Strömungsverbindung zwischen dem Fluidkanal 4 und der Ventilaufnahme 5 unterbunden ist. In anderen Worten verschließt der Ventilkörper 11 in dieser Stellung die Mündungsöffnung 9 des Fluidkanals 4.

Der Ventilkörper 11 ist über mehrere Federarme 12 elastisch und in axialer Richtung bezüglich der Längsmittelachse 6 verlagerbar gelagert, nämlich an einem Haltering 13, der den Ventilkörper 11 in wenigstens einer Stellung des Ventilkörpers 11 umgreift. Es kann hierbei vorgesehen sein, dass der Ventilkörper 11 und der Haltering 13 in wenigstens einer Stellung des Ventilkörpers 11 miteinander fluchten, also in einer gemeinsamen gedachten Ebene angeordnet sind. Der Haltering 13 ist mit einem Rastkörper 14 des Rückschlagventilelements 3 verbunden, nämlich über einen gebogenen Übergangsbereich 15. Der Haltering 13, der Übergangsbereich 15 und der Rastkörper 14 sind materialeinheitlich und einstückig miteinander ausgestaltet. Beispielsweise bestehen sie beziehungsweise das von ihnen gemeinsam gebildete Bauteil, also das Rückschlagventilelement 3, aus Metall, insbesondere aus Metallblech, beispielsweise aus Stahlblech.

Der Rastkörper 14 dient einem rastenden Befestigen des Rückschlagventilelements 3 in der fluidführenden Einrichtung 2 beziehungsweise in der Ventilaufnahme 5. Hierzu erstreckt sich der Rastkörper 14 in axialer Richtung in die von dem Ventilkörper 11 abgewandte Richtung und verfügt über einen in radialer Richtung federelastisch verlagerbaren Rastvorsprung 16. In dem hier dargestellten Ausführungsbeispiel sind mehrere Rastvorsprünge 16 dargestellt, wobei jeweils zwei dieser Rastvorsprünge 16 von einer Ausnehmung 17 voneinander separiert sind, nämlich in Umfangsrichtung. Sofern im Rahmen dieser Beschreibung nur auf den Rastvorsprung 16 beziehungsweise die Ausnehmung 17 Bezug genommen wird, so betreffen die entsprechenden Ausführungen bevorzugt stets alle Rastvorsprünge 16 beziehungsweise alle Ausnehmungen 17

Zur Befestigung des Rückschlagventilelements 3 greift der Rastvorsprung 16 beziehungsweise greifen die Rastvorsprünge 16 in eine Rastaufnahme 18 ein, die in der fluidführenden Einrichtung 2 ausgebildet ist, nämlich randoffen in Richtung der Ventilaufnahme 5. Bei einem Einbringen des Rückschlagventilelements 3 in die Ventilaufnahme 5 wird der Rastvorsprung 16 in radialer Richtung elastisch nach innen ausgelenkt. Sobald er die Rastaufnahme 18 erreicht, wird er durch seine Federwirkung in radialer Richtung nach außen in Richtung seiner Ausgangsstellung entspannt, sodass nachfolgend das Rückschlagventilelement 3 zuverlässig haltend in die Rastaufnahme 18 eingreift.

Der Rastkörper 14 weist vorzugsweise einen zylindrischen, insbesondere kreiszylindrischen, Bereich auf. Dieser liegt in axialer Richtung gesehen zwischen dem Rastvorsprung 16 beziehungsweise der Ausnehmung 17 und dem Ventilkörper 11 und/oder dem Übergangsbereich 15 vor. Bevorzugt liegt der zylindrische Bereich zumindest bereichsweise mit einer Außenumfangsfläche an einer Innenumfangsfläche der fluidführenden Einrichtung 2 an, wobei die Innenumfangsfläche die Ventilaufnahme 5 in radialer Richtung nach außen begrenzt.

Es ist deutlich erkennbar, dass der Rastvorsprung 16 als ein in radialer Richtung nach außen gebogener Bereich des Rastkörpers 14 vorliegt. In anderen Worten ist ein dem Ventilkörper 11 abgewandter Rand 19 des Rückschlagventilelements 3 in radialer Richtung nach außen gebogen. Zur Erzielung einer hervorragenden Federwirkung des Rastvorsprungs 16 ist die Ausnehmung 17 randoffen ausgebildet, durchgreift also den Rand 19 des Rückschlagventilelements 3 in axialer Richtung.

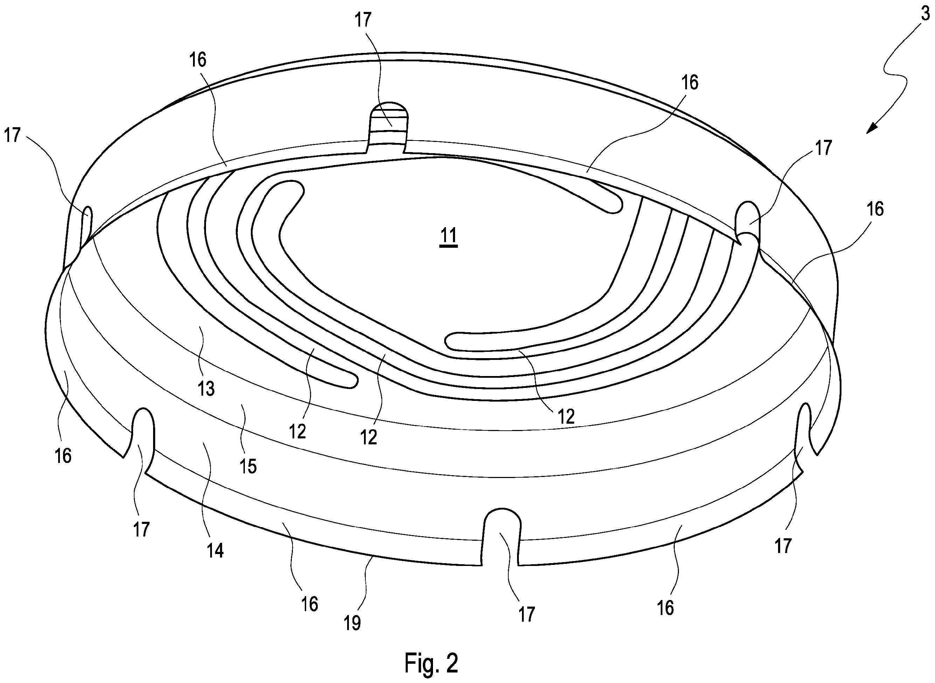

Die Figur 2 zeigt eine schematische Darstellung des Rückschlagventilelements 3. Es wird deutlich, dass die Federarme 12 einerseits mit dem Ventilkörper 11 und andererseits mit dem Haltering 13 materialeinheitlich und einstückig ausgebildet sind. Zudem verlaufen sie zwischen dem Ventilkörper 11 und dem Haltering 13 spiralförmig, weisen also zusätzlich zu einer radialen Komponente eine Umfangskomponente ihrer Erstreckung auf. Beispielsweise umgreifen die Federarme 12 den Ventilkörper 11 in Umfangsrichtung bezüglich der Längsmittelachse 6 gesehen, welche in dem hier dargestellten Ausführungsbeispiel auch mit einer Längsmittelachse des Rückschlagventilelements 3 zusammenfällt, um mindestens 45°, mindestens 90°, mindestens 135°, mindestens 180° oder mehr.

Die hier beschriebene Ausgestaltung des Rückschlagventilelements 3 beziehungsweise der Rückschlagventilbaugruppe 1 ermöglicht zum einen eine äußerst einfache Montage durch Einrasten des Rückschlagventilelements 3 in die fluidführende Einrichtung 2 beziehungsweise die Ventilaufnahme 5. Zum anderen ist das Rückschlagventilelement 3 aufgrund der geringen Teileanzahl äußerst kostengünstig herstellbar.

## Patentansprüche

1. Rückschlagventilelement (3) aus Metallblech für eine Rückschlagventilbaugruppe (1), mit einem eine Dichtfläche aufweisenden und federelastisch gelagerten Ventilkörper (11), der über spiralförmige Federarme (12) mit einem den Ventilkörper (11) in wenigstens einer Stellung umgreifenden Haltering (13) derart federelastisch verbunden ist, dass der Ventilkörper (11) in axialer Richtung parallel verlagerbar ist, wobei die Federarme (12) einstückig und materialeinheitlich mit dem Ventilkörper (11) und dem Haltering (13) ausgebildet sind, **dadurch gekennzeichnet, dass** der Haltering (13) einstückig und materialeinheitlich mit einem Rastkörper (14) zum rastenden Befestigen des Rückschlagventilelements (3) in einer fluidführenden Einrichtung (2) der Rückschlagventilbaugruppe (1) ausgebildet ist, der über einen gebogenen Übergangsbereich (15) in den Haltering (13) übergeht, sich in axialer Richtung in die von dem Ventilkörper (11) abgewandte Richtung erstreckt und wenigstens einen in radialer Richtung federelastisch verlagerbaren Rastvorsprung (16) sowie einen ebenfalls in radialer Richtung federelastisch verlagerbaren weiteren Rastvorsprung (16) aufweist, wobei der Rastvorsprung (16) und der weitere Rastvorsprung (16) in Umfangsrichtung von einer in dem Rastkörper (14) ausgebildeten und in die von dem Haltering (13) abgewandte Richtung randoffenen Ausnehmung (17) separiert sind.

2. Rückschlagventilelement nach Anspruch 1, **dadurch gekennzeichnet, dass** der Rastkörper (14) wenigstens bereichsweise zylindrisch, insbesondere kreiszylindrisch, ausgebildet ist.

3. Rückschlagventilelement nach einem der vorhergehenden Ansprüche, **dadurch gekennzeichnet, dass** der Rastvorsprung (16) auf der dem Haltering (13) abgewandten Seite des Rastkörpers (14) angeordnet ist.

4. Rückschlagventilelement nach einem der vorhergehenden Ansprüche, **dadurch gekennzeichnet, dass** der Rastvorsprung (16) als ein in radialer Richtung nach außen gebogener Bereich des Rastkörpers (14) vorliegt.

5. Rückschlagventilelement nach den Ansprüchen 2 und 4, **dadurch gekennzeichnet, dass** sich der gebogene Bereich des Rastkörpers (14) in axialer Richtung gesehen an den zylindrischen Bereich des Rastkörpers (14) anschließt.

6. Rückschlagventilelement nach einem der vorhergehenden Ansprüche, **dadurch gekennzeichnet, dass** die Federarme (12) durch Stanzen und der Rastkörper (14) durch Tiefziehen ausgebildet sind.

7. Rückschlagventilbaugruppe (1), mit einem Rückschlagventilelement (3) aus Metallblech, das über einen eine Dichtfläche aufweisenden und federelastisch gelagerten Ventilkörper (11) verfügt, der über spiralförmige Federarme (12) mit einem den Ventilkörper (11) in wenigstens einer Stellung umgreifenden Haltering (13) derart federelastisch verbunden ist, dass der Ventilkörper (11) in axialer Richtung parallel verlagerbar ist, wobei die Federarme (12) einstückig und materialeinheitlich mit dem Ventilkörper (11) und dem Haltering (13) ausgebildet sind, **dadurch gekennzeichnet, dass** der Haltering (13) einstückig und materialeinheitlich mit einem Rastkörper (14) zum rastenden Befestigen des Rückschlagventilelements (3) in einer fluidführenden Einrichtung (2) der Rückschlagventilbaugruppe (1) ausgebildet ist, der über einen gebogenen Übergangsbereich (15) in den Haltering (13) übergeht, sich in axialer Richtung in die von dem Ventilkörper (11) abgewandte Richtung erstreckt und wenigstens einen in radialer Richtung federelastisch verlagerbaren Rastvorsprung (16) sowie einen ebenfalls in radialer Richtung federelastisch verlagerbaren weiteren Rastvorsprung (16) aufweist, wobei der Rastvorsprung (16) und der weitere Rastvorsprung (16) in Umfangsrichtung von einer in dem Rastkörper (14) ausgebildeten und in die von dem Haltering (13) abgewandte Richtung randoffenen Ausnehmung (17) separiert sind.

## Claims

1. Check valve element (3) made of sheet metal for a check valve assembly (1), comprising a valve body (11) which has a sealing surface and is resiliently mounted, which is resiliently connected via spiral-shaped spring arms (12) to a retaining ring (13) encompassing the valve body (11) in at least one position, such that the valve body (11) can be displaced in a parallel manner in the axial direction, wherein the spring arms (12) are formed as one-piece and of the same material with the valve body (11) and the retaining ring (13),
**characterised in that** the retaining ring (13) is formed as one piece and of the same material with a latching body (14) for latch fastening of the check valve element (3) in a fluid conducting device (2) of the check valve assembly (1), which merges into the retaining ring (13) via a curved transition region (15), which extends in the axial direction in the direction facing away from the valve body (11) and has at least one latching protrusion (16) which can be resiliently displaced in the radial direction and a further latching protrusion (16) which can likewise be resiliently displaced in the radial direction, wherein the latching protrusion (16) and the further latching protrusion (16) are separated in the circumferential direction by a recess (17) formed in the latching body (14) and open at the edge in the direction facing away from the retaining ring (13).

2. Check valve element according to claim 1, **characterised in that** the latching body (14) is at least partially cylindrical, in particular circular cylindrical.

3. Check valve element according to any one of the preceding claims, **characterised in that** the latching protrusion (16) is arranged on the side of the latching body (14) facing away from the retaining ring (13).

4. Check valve element according to any one of the preceding claims, **characterised in that** the latching protrusion (16) is a region of the latching body (14) that is curved outwards in the radial direction.

5. Check valve element according to claims 2 and 4, **characterised in that** the curved region of the latching body (14) adjoins the cylindrical region of the latching body (14) as viewed in the axial direction.

6. Check valve element according to any one of the preceding claims, **characterised in that** the spring arms (12) are formed by punching and the latching body (14) by deep-drawing.

7. Check valve assembly (1) comprising a check valve element (3) made of sheet metal, that has a valve body (11) which has a sealing surface and is resiliently mounted, which is resiliently connected via spiral spring arms (12) to a retaining ring (13) encompassing the valve body (11) in at least one position, such that the valve body (11) can be displaced in a parallel manner in the axial direction, wherein the spring arms (12) are formed as one-piece and of the same material with the valve body (11) and the retaining ring (13),
**characterised in that** the retaining ring (13) is formed as one piece and of the same material with a latching body (14) for latch fastening of the check valve element (3) in a fluid conducting device (2) of the check valve assembly (1), which merges into the retaining ring (13) via a curved transition region (15), which extends in the axial direction in the direction facing away from the valve body (11) and has at least one latching protrusion (16) which can be resiliently displaced in the radial direction and a further latching protrusion (16) which can likewise be resiliently displaced in the radial direction, wherein the latching protrusion (16) and the further latching protrusion (16) are separated in the circumferential direction by a recess (17) formed in the latching body (14) and open at the edge in the direction facing away from the retaining ring (13).

## Revendications

1. Élément de soupape antiretour (3) en tôle pour un ensemble formant soupape antiretour (1), avec un corps de soupape (11) présentant une surface d'étanchéité et monté de manière élastique et relié de manière élastique par l'intermédiaire de bras de ressort (12) en forme de spirale à une bague de retenue (13) entourant le corps de soupape (11) dans au moins une position de telle manière que le corps de soupape (11) peut être déplacé de manière parallèle dans la direction axiale, dans lequel les bras de ressort (12) sont réalisés d'un seul tenant avec, et dans le même matériau que, le corps de soupape (11) et la bague de retenue (13), **caractérisé en ce que** la bague de retenue (13) est réalisée d'un seul tenant avec, et dans le même matériau que, un corps d'encliquetage (14) permettant une fixation par encliquetage de l'élément de soupape antiretour (3) dans un appareil de guidage de fluide (2) de l'ensemble formant soupape antiretour (1), qui se transforme en la bague de retenue (13) par l'intermédiaire d'une région de transition (15) courbe, s'étend dans la direction axiale dans la direction opposée au corps de soupape (11), présente au moins une saillie d'encliquetage (16) pouvant être déplacée de manière élastique dans la direction radiale, et présente une autre saillie d'encliquetage (16) pouvant également être déplacée de manière élastique dans la direction radiale, dans lequel la saillie d'encliquetage (16) et l'autre saillie d'encliquetage (16) sont séparées dans la direction circonférentielle par un évidement (17) réalisé dans le corps d'encliquetage (14) et à bord ouvert dans la direction opposée à la bague de retenue (13).

2. Élément de soupape antiretour selon la revendication 1, **caractérisé en ce que** le corps d'encliquetage (14) est réalisé au moins par endroits de manière cylindrique, en particulier de manière cylindrique circulaire.

3. Élément de soupape antiretour selon l'une quelconque des revendications précédentes, **caractérisé en ce que** la saillie d'encliquetage (16) est agencée sur le côté du corps d'encliquetage (14) qui est opposé à la bague de retenue (13).

4. Élément de soupape antiretour selon l'une quelconque des revendications précédentes, **caractérisé en ce que** la saillie d'encliquetage (16) se présente sous la forme d'une région du corps d'encliquetage (14) qui est coudée vers l'extérieur dans la direction radiale.

5. Élément de soupape antiretour selon les revendications 2 et 4, **caractérisé en ce que** la région courbe du corps d'encliquetage (14) est adjacente à la région cylindrique du corps d'encliquetage (14) lorsqu'on la considère en direction axiale.

6. Élément de soupape antiretour selon l'une quelconque des revendications précédentes, **caractérisé en ce que** les bras de ressort (12) sont réalisés par estampage et le corps d'encliquetage (14) est réalisé par emboutissage.

7. Ensemble formant soupape antiretour (1), avec un élément de soupape antiretour (3) en tôle muni d'un corps de soupape (11) présentant une surface d'étanchéité et monté de manière élastique et relié de manière élastique par l'intermédiaire de bras de ressort (12) en forme de spirale à une bague de retenue (13) entourant le corps de soupape (11) dans au moins une position de telle manière que le corps de soupape (11) peut être déplacé de manière parallèle dans la direction axiale, dans lequel les bras de ressort (12) sont réalisés d'un seul tenant avec, et dans le même matériau que, le corps de soupape (11) et la bague de retenue (13), **caractérisé en ce que** la bague de retenue (13) est réalisée d'un seul tenant avec, et dans le même matériau que, un corps d'encliquetage (14) permettant une fixation par encliquetage de l'élément de soupape antiretour (3) dans un appareil de guidage de fluide (2) de l'ensemble formant soupape antiretour (1), qui se transforme en la bague de retenue (13) par l'intermédiaire d'une région de transition (15) courbe, s'étend dans la direction axiale dans la direction opposée au corps de soupape (11), présente au moins une saillie d'encliquetage (16) pouvant être déplacée de manière élastique dans la direction radiale, et présente une autre saillie d'encliquetage (16) pouvant également être déplacée de manière élastique dans la direction radiale, dans lequel la saillie d'encliquetage (16) et l'autre saillie d'encliquetage (16) sont séparées dans la direction circonférentielle par un évidement (17) réalisé dans le corps d'encliquetage (14) et à bord ouvert dans la direction opposée à la bague de retenue (13).
